# EUROPÄISCHE PATENTSCHRIFT

(11) **EP 0 924 269 B1**
(45) Veröffentlichungstag und Bekanntmachung des Hinweises auf die Patenterteilung: **21.08.2002**
(21) Anmeldenummer: 98122233.4
(22) Anmeldetag: 23.11.1998
(51) Int. Cl.: C09C 3/12, C09C 1/30

(54) **Verfahren zur Oberflächenbehandlung von hochdispersen Oxiden**
Process for the surface treatment of finely divided oxides
Procédé pour le traitement superficiel des oxydes finement divisés

(30) Priorität: 22.12.1997 DE 19757210
(43) Veröffentlichungstag der Anmeldung: 23.06.1999
(73) Patentinhaber: Degussa AG, 40474 Düsseldorf (DE)
(72) Erfinder: Troll, Harald Dr., 63755 Alzenau (DE); Hennig, Thomas Dr., 63571 Gelnhausen (DE); Meyer, Jürgen Dr., 63811 Stockstadt/M. (DE); Schachtely, Uwe, 63517 Rodenbach (DE); Karbe, Henning, 65462 Ginsheim (DE)

(56) Entgegenhaltungen:
- EP-A- 0 340 129
- DE-B- 1 163 784
- FR-A- 1 234 245
- FR-A- 1 520 663
- FR-A- 2 411 157

## Beschreibung

Die Erfindung betrifft ein Verfahren zur Oberflächenbehandlung von hochdispersen Oxiden.

Es ist bekannt, pyrogen hergestellte Oxide, Oxidgemische oder Mischoxide von Metallen und/oder Metalloiden mit Hydrophobierungsmitteln, wie zum Beispiel Dimethyldichlorsilan, zu behandeln (DE-AS 11 63 784).

Es ist weiterhin bekannt, feinteilige Oxide in einem Bett mit Octamethylcyclotetrasiloxan zu behandeln (GB-A 887 257).

Es ist weiterhin bekannt, feinteilige Oxide mit Octamethylcyclotetrasiloxan in einem Eintopfverfahren zu hydrophobieren (GB-A 932 753, US-A 2 803 617).

Die bekannten Verfahren haben den Nachteil, daß das Octamethylcyclotetrasiloxan nicht vollständig an der Oberfläche der Oxide gebunden wird.

Es bestand nun die Aufgabe, ein Verfahren zur Oberflächenbehandlung (Hydrophobierung) von hochdispersen Oxiden, Oxidgemischen oder Mischoxiden von Metallen und/oder Metalloiden, das diese Nachteile nicht aufweist, zu entwickeln.

Erfindungsgemäß herstellbar sind hydrophobierte, pyrogen hergestellte Oxide, Oxidgemische oder Mischoxide von Metallen und/oder Metalloiden, welche dadurch gekennzeichnet sind, daß sie ein Verhältnis von Dimethyl- zu Monomethylsilylgruppen von 100:0 bis 50:50, bevorzugt 100:0 bis 70:30 aufweisen.

Das Verhältnis von Dimethyl- zu Monomethylsilylgruppen wird mittels Si-29-Festkörper-NMR-Spektroskopie ermittelt.

Für die Einstellung des Verhältnisses von Dimethyl- zu Monomethylsilylgruppen ist die Temperaturführung während des Hydrophobierungsschrittes von Bedeutung.

Bei der Behandlung von pyrogener Kieselsäure mit einer hydrophilen Oberfläche von 200 m²/g bei Temperaturen von 350°C bis 450°C werden Produkte mit 100 % Dimethylsilylgruppen an der Kieselsäureoberfläche erhalten. Die Verdickungswirkung der erhaltenen hydrophoben Kieselsäuren beträgt, gemessen in Araldit, hierbei 2500 bis 3000 mpas. Wird die Temperatur auf 550°C bis 600°C gesteigert, so erhöht sich der Monomethylsilylanteil auf ca. 30 %. Das Verhältnis von Dimethyl- zu Monomethylsilylgruppen beträgt somit 70 : 30. Die Verdickung der erhaltenen hydrophoben Kieselsäuren beträgt zwischen 400 bis 1000 mpas. Die Menge des chemisch gebundenen Kohlenstoffs steigt von durchschnittlich 1,2 % auf 1,6 bis 1,9 % an. Die Methanolbenetzbarkeit steigt um 5 bis 8 % und erreicht Werte von durchschnittlich 45 % (max. 51 %).

Durch die Möglichkeit hydrophobe Kieselsäuren mit definiertem Dimethylsilyl- zu Monomethylsilylverhältnis und folglich mit einer definierten Rheologie (Verdickungsverhalten) und niedrigem Chloridgehalt herstellen zu können, ergeben sich Vorteile bei der Anwendung in Produkten, die nur einen möglichst geringen Restgehalt an korrosiven Nebenprodukten (z. B. Salzsäure oder Ammoniak) aufweisen dürfen.

Derartige Anwendungsmöglichkeiten sind zum Beispiel für eine erfindungsgemäß herstellbare hydrohobe Kieselsäure mit einem Dimethyl- zu Monomethylsilylgruppenverhältnis von 100 : 0 , daß heißt bei einem 100 % Dimethylsilylanteil mit niedrigerer Methanolbenetzbarkeit sowie mit niedrigem Chloridgehalt, besonders standfeste Dichtungsmassen für die Bauindustrie, insbesondere wenn eine hohe Transparenz erforderlich ist, z. B. bei dem Verfugen von Glasfassaden oder im Sanitärbereich.

Für eine erfindungsgemäß herstellbare hydrophobe Kieselsäure mit einem Dimethyl- zu Monomethylsilylgruppenverhältnis von 70 : 30, d. h. bei einem 70 % Dimethylsilylanteil mit niedriger Verdickung, hoher Methanolbenetzbarkeit sowie niedrigem Chloridgehalt ergeben sich Anwendungsmöglichkeiten bei selbstnivellierenden Dichtstoffen für optimales Verbinden/Überbrücken von Bauteilen und Fugen, Silikonmassen mit geringer Viskosität bzw. Thixotropie, die optimale Abformgenauigkeit und Detailgenauigkeit gewährleisten (z. B. Abformmassen, Dentaldupliermassen), hochtransparente Polymethacrylatmassen, die bisher üblicherweise durch ein Preßverfahren, jetzt aber aufgrund des Einsatzes der erfindungsgemäß herstellbaren Kieselsäure eine niedrigere Viskosität aufweisen und daher durch ein wesentlich schnelleres Spritzgußverfahren hergestellt werden, wie z. B. hochtransparente Schuhsolen auf Basis EPDM und bei der Abdichtung elektronischer Schaltungen auf Basis Silikonkautschuk, wo ein sehr geringer Chloridgehalt für die Langlebigkeit der elektronischen Bauteile (Korrosionsschutz) wichtig ist.

Gegenstand der Erfindung ist ein Verfahren zur Oberflächenbehandlung von hochdispersen Oxiden, Oxidgemischen oder Mischoxiden von Metallen und/oder Metalloiden, die durch thermische Zersetzung von flüchtigen Verbindungen dieser Metalle bzw. Metalloide in dampfförmigem Zustand in Gegenwart hydrolysierend und/oder oxidierend wirkender Gase oder Dämpfe erhalten worden sind, durch Umsetzung ihrer an der Oberfläche befindlichen freien oder in Freiheit gesetzten OH-Gruppen mit Hydrophobierungsmitteln, die zur Umsetzung mit Hydroxylgruppen geeignet sind, in einer Wirbelschicht, bis sie ein Verhältnis von Dimethyl- zu Monomethylsilylgruppen von 100:0 bis 50:50, bevorzugt 100:0 bis 70:30, aufweisen, wobei man die noch sauren Oxide, Oxidgemische oder Mischoxide direkt im Anschluß an deren Herstellung mit einem zuvor verdampften Hydrophobierunsmittel möglichst homogen vermischt und unter Sauerstoffausschluß zusammen mit geringen Wasserdampfmengen und gegebenenfalls mit einem Intertgas in kontinuierlichem Betrieb bei Temperaturen von etwa 200 bis etwa 800 °C, vorzugsweise etwa 400 bis etwa 600 °C, in einem Wirbelbett behandelt und die festen Reaktionsprodukte gegebenenfalls nachentsäuert und trocknet, wobei man zweckmäßigerweise eine Berührung mit Sauerstoff vor dem Abkühlen auf unter etwa 200 °C vermeidet, welches dadurch gekennzeichnet ist, daß man als Hydrophobierurigsmittel, nicht halogenhaltige, kettenförmige Siloxane, monocyclische Methyl-Dimethyl-Cyclosiloxangemische D3 bis D9, vorzugsweise Octamethylcyclotetrasiloxan (D4) verwendet.

Die Polydimethylcyclosiloxane D3 bis D9 sind bekannte Verbindungen der allgemeinen Summenformel [(CH₃)₂SiO]ₙ, wobei n = 3 bis 9 sein kann. Diese Nomenklatur ist aufgeführt in Ullmanns Encyclopädie der technischen Chemie (1982 ), Band 21, Seite 515 sowie in W. Noll, Chemie und Technologie der Silicone (1968), Verlag Chemie, Seite 237.

Pyrogen, insbesondere durch Flammen- oder Hochtemperaturhydrolyse, hergestellte Oxide, Oxidgemische oder Mischoxide von Metallen und/oder Metalloide und ihre Herstellung sind bekannt (Ullmanns Encyklopädie der technischen Chemie, 4. Auflage, Band 21, Seite 464 ff.).

Ebenso sind die Aerosil-Typen Aerosil 200 und Aerosil 300, die seit langem im Handel erhältlich sind, aus jenem Dokument bekannt. Aerosil 200 und Aerosil 300 sind weiterhin aus "Aerosil-Herstellung, Eigenschaften und Anwendung", Firmenschrift der Degussa, Ausgabe Juni 1978, bekannt.

Bevorzugterweise können als hydrophile Ausgangsmaterialien pyrogen hergestellte Oxide mit einer BET-Oberfläche von 20 bis 400 m²/g, vorzugsweise 50 bis 380 m²/g eingesetzt werden.

In einer Ausführungsform der Erfindung kann man die mit dem Octamethylcyclotetrasiloxan (D4) vermischten Oxyde gemeinsam mit dem tragenden Medium dem Wirbelbett zuführen und aus dem oberen Teil, vorzugsweise nach Durchlaufen einer an sich bekannten Beruhigungszone, laufend abziehen.

Weiterhin kann man die Behandlung in einem an sich bekannten innenbeheizten Wirbelbett durchführen.

Die benötigte Wärme kann man in an sich bekannter Weise teilweise in Form von Wasserdampf und/oder eines heißen Inertgases zuführen.

Den Wasserdampf und/oder das Inertgas kann man in an sich bekannter Weise gleichzeitig zur pneumatischen Förderung der Reaktionspartner verwenden.

Bei dem erfindungsgemäßen Verfahren kann das Verhältnis Dimethylsilyl- zu Monomethylsilyl-Gruppen auf dem hydrophobierten pyrogen hergestellten Oxid durch die Temperaturführung während der Hydrophobierung gesteuert werden.

In einer bevorzugten Ausführungsform der Erfindung kann die Temperatur in einem Bereich von 500 bis 600 °C variiert werden, wobei eine Verweilzeit von 0,5 ± 0,2 h eingehalten werden kann.

Die Zuführung des bevorzugterweise eingesetzten Hydrophobierungsmittels Octamethylcyclotetrasiloxan (D4) kann in Form des Dampfes erfolgen.

Gegebenenfalls noch anhaftende Salzsäure sowie überschüssiges Hydrophobierungsmittel können in einem nachgeschalteten, angestauten Gegenstromfließbett bei Temperaturen von 250 bis 350 °C bei einer Verweilzeit von 0,5 ± 0,2 h entfernt werden. Dabei wird das Anstauen und damit der Füllgrad des Entsäuerungsfließbettes durch Androsseln der Produktaustragsklappe erreicht. Die sich durch den hydrostatischen Druck einstellende Druckdifferenz zwischen Fließbettdom und Fließbettboden kann am Fließbettaustrag durch Nachregelung der Produktaustragsklappe bei 20 bis 40 mm Wassersäule gehalten werden.

Das erfindungsgemäße Verfahren kann im Gegenstrom- oder zweckmäßiger im Gleichstromverfahren durchgeführt werden. Dabei kann das Fließbett derart dimensioniert sein, daß die wirbelnde Suspension aus Kieselsäure und Hydrophobierungsmittel ständig nach oben wandert und aus dem oberen Teil des Raumes, vorzugsweise nach Durchlaufen einer Beruhigungszone, laufend abließen kann.

Vorteilhafterweise kann man durch die Variation der Temperatur in dem Hydrophobierungsfließbett das Dimethylsilyl-Monomethylsilyl-Verhältnis und damit das Verdickungsverhalten der erhaltenen Produkte gezielt einstellen.

Im oberen Teil des Fließbetts kann überschüssiges Hydrophobierungsmittel, das nicht auf der Kieselsäureoberfläche chemisch gebunden wurde, abgezogen werden.

Bei dem erfindungsgemäßen Verfahren können die Hydrophobierung und Entsäuerung auch in einer gemeinsam genutzten Vorrichtung durchgeführt werden. Diese Vorrichtung kann dann vorzugsweise derart gestaltet sein, daß die Hydrophobierung im Gleichstrom (Innenmantel) und die Entsäuerung im Gegenstrom (Aussenmantel) durchgeführt werden kann.

Das erfindungsgemäße Verfahren wird direkt im Anschluß an das Herstellungsverfahren für pyrogene Oxide durchgeführt. Bei dem erfindungsgemäßen kontinuierlichen Verfahren kann man auf den Zusatz von Säuren oder Basen, die üblicherweise als Katalysator bei der Hydrosilylierungsreaktion eingesetzt werden, verzichten, wenn die Hydrophobierung an nicht entsäuerten, pyrogen hergestellten Kieselsäuren durchgeführt wird.

Diese Verfahrensweise hat gegenüber dem Verfahren gemäß DE-AS 11 63 784 den Vorteil, daß über die für die Hydrosilyierungsreaktion katalytisch notwendigen Säuren (wie HCl)/Basen hinaus keine sauren Nebenprodukte, z. B. HCl, entstehen.

Durch die Kopplung der Verfahrensschritte Kieselsäureherstellung mit der direkt anschlossenen Silylierungsreakton (Hydrophobierung) können Produkte mit sehr niedrigen Anteilen an sauren Nebenprodukten erhalten werden.

Da keine sauren Nebenprodukte, wie z. B. HCl, entstehen, tritt nach dem Prinzip von Le Chatelier auch eine Hemmung bei der Reaktion der freien Silanolgruppen mit nicht halogenhaltigen Siloxanen ein. Die hierdurch schnellere, optimierte Reaktionsgeschwindigkeit ermöglicht im Gegensatz zu dem bekannten Verfahren gemäß DE-AS 11 63 784 auch die Hydrophobierung von hochoberflächigen, pyrogen hergestellten Kieselsäuren.

Die erfindungsgemäß herstellten hydrophobierten Oxide haben den Vorteil, daß sie einen sehr geringen Gehalt an Restchlorid von maximal 100 ppm aufweisen.

### Beispiele

### Beispiel 1

Die Herstellung der hydrophoben Kieselsäure 1 (Basis pyrogen hergestellte Kieselsäure Aerosil 200) und der hydrophoben Kieselsäure 2 (Basis pyrogen hergestellte Kieselsäure Aerosil 300) erfolgt vollkontinuierlich gemäß DE-AS 11 63 784.

Die auf pyrogenen Wege erzeugte Kieselsäure Aerosil 200 bzw. Aerosil 300 wird in derselben Anlage - ohne vorher zu entsäuern und zwischenzulagern - mit Octamethylcyclotetrasiloxan (D4) Dampf in einem Injektor intensiv gemischt und einem mit Stickstoff inertisierten Gleichstromfließbett zugeführt.

Durch Behandlung mit Wasserdampf bei einer Temperatur von 500 - 600°C und einer Verweilzeit von 0,5 h im Fließbett wird Octamethylcyclotetrasiloxan (D4) chemisch auf der Aerosiloberfläche gebunden. Durch die Variation der Temperatur im Fließbett kann das Dimethylsilyl-, Monomethylsilylverhältnis der Oberflächengruppen gesteuert werden. Noch anhaftende Salzsäure sowie überschüssiges Octamethylcyclotetrasiloxan werden in einem nachgeschalteten, angestauten Gegenstromfließbett bei Temperaturen von 250 bis 350°C (Verweilzeit ca. 0,5 h) entfernt. Das Anstauen und damit der Füllgrad des Entsäuerungsfließbettes wird durch Androsseln der Produktaustragsklappe erreicht. Die sich durch den hydrostatischen Druck der pyrogenen Kieselsäure einstellende Druckdifferenz zwischen Fließbettdom und Fließbettboden wird am Fließbettaustrag durch automatische Nachregelung der Austragsklappe bei 20 bis 40 mm WS gehalten. Das Dimethyl- und Monomethylsilylverhältnis beträgt 70 zu 30 bei beiden hydrophoben Kieselsäuren.

### Beispiel 2

Das Verfahren wird gemäß Beispiel 1 durchgeführt, wobei sich jedoch zwischen dem Hydrophobierungs- und dem Entsäuerungsfließbett ein Zwischenbunker befindet.

### Beispiel 3

Das Verfahren wird gemäß Beispiel 1 durchgeführt, wobei während des Hydrophobierungsschrittes die Temperatur von 350°C nicht überschritten und zusätzlich Salzsäure eingedüst wird. Das Dimethyl- zu Monomethylverhältnis beträgt 100 zu 0.

Die Verfahrensparameter zu den Beispielen 1 bis 3 sind in der Tabelle 1 dargestellt. Die physikalisch-chemischen Daten der hergestellten Kieselsäuren 1 und 2 sind in der Tabelle 2 dargestellt.

Die als Edukte eingesetzten pyrogen hergestellten Kieselsäuren weisen die folgenden physikalisch-chemischen Kenndaten auf:

| | | |
|---|---|---|
| Phys.-chem. Kenndaten | A 200 | A 300 |
| Spez. Oberfläche (m²/g) | 200 ± 25 | 300 ± 30 |
| Trocknungsverlust (%) | < 1,5 | < 1,5 |
| Glühverlust (%) | < 1 | < 2 |
| SiO₂-Gehalt (%) | > 99,8 | > 99,8 |

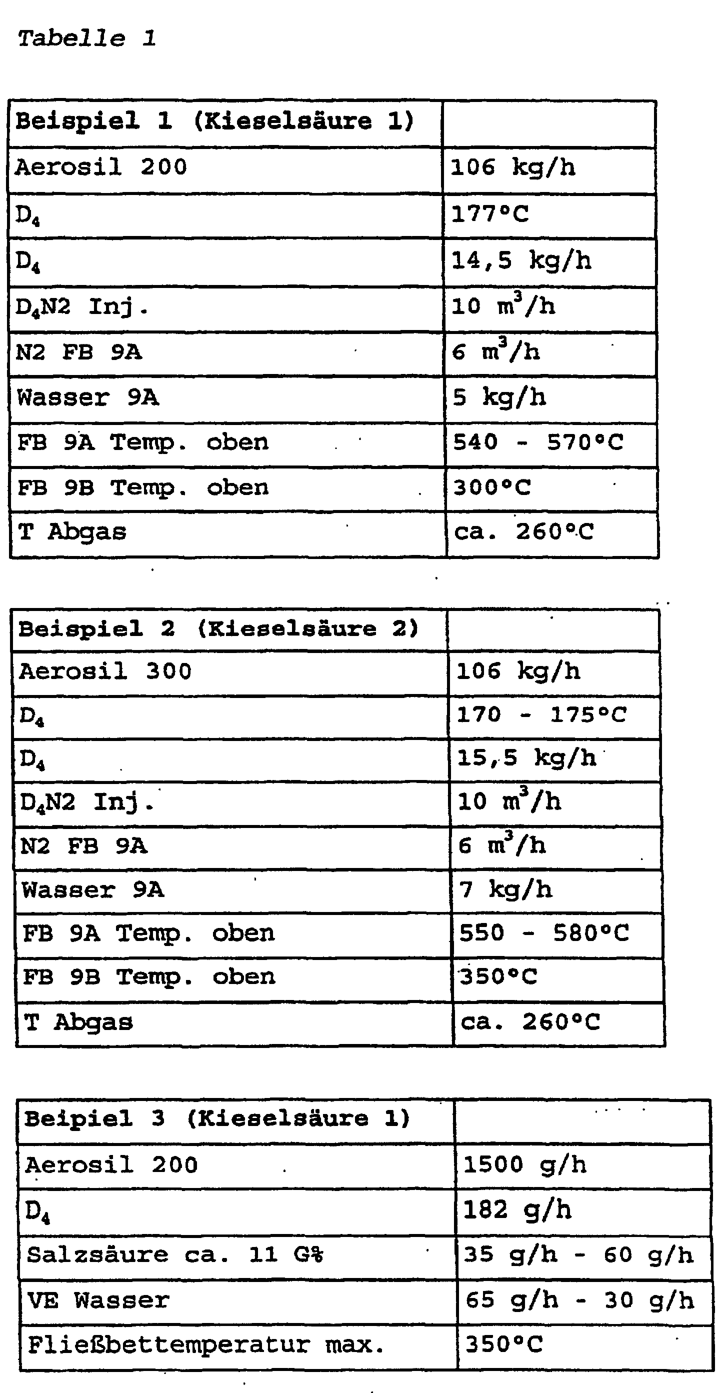

**Tabelle 2**

| Eigenschaften | **Kieselsäure 1** | **Kieselsäure 2** |
|---|---|---|
| Verhalten gegenüber Wasser | hydrophob | hydrophob |
| Oberfläche nach BET m²/g | 150 ± 25 | 250 ± 30 |
| Mittlere Größe der Primärteilchen nm | 12 | 7 |
| Trocknungsverlust | < 0,1 | < 0,3 |
| Stampfdichte | ca. 50 | ca. 50 |
| pH-Wert (4%ig in Wasser) | > 4,0 | > 3,7 |
| Kohlenstoff % | 1,0 - 2,0 | 1,5 - 3,0 |
| Dimethyl-/Monomethylsilyl % | 50/50 bis 100/0 | 50/50 bis 100/0 |
| SiO₂ % | < 99,8 | < 99,8 |
| Al₂O₃ % | < 0,05 | < 0,05 |
| FeO₃ % | < 0,01 | < 0,01 |
| TiO₂ % | < 0,03 | < 0,03 |
| HCl % | < 0,02 | < 0,025 |

Die Methanolbenetzbarkeit der Kieselsäure 1 und 2 beträgt für die
- Kieselsäure 1: 40 % (hohe Verdickung) bis
> 45 % (niedrige Verdickung)
- Kieselsäure 2: 35 % (hohe Verdickung) bis
> 40 % (niedrige Verdickung)

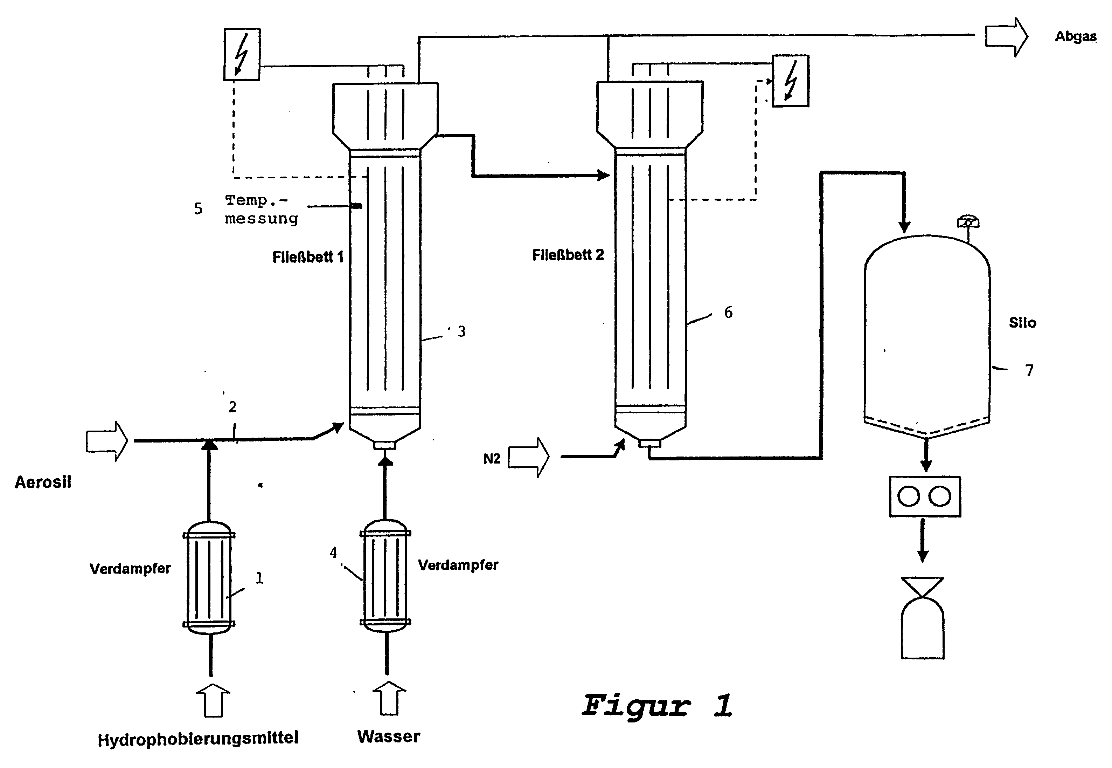

Das erfindungsgemäße Verfahren kann in einer Vorrichtungsanordnung, wie sie in der Figur 1 dargestellt ist, durchgeführt werden.

Gemäß Figur 1 wird das Hydrophobierungsmittel in dem Verdampfer 1 verdampft und mit den pyrogenen Oxid in der Leitung 2 vermischt. Diese Mischung wird mit dem Fließbettreaktor 3 (Fließbett 1) zufgeführt. In dem Fließbettreaktor 3 wird von unten Wasserdampf, der in dem Verdampfer 4 erzeugt wird, zugeführt. Die Steuerung der Hydrophobierungstemperatur erfolgt mittels der Temperaturmessung 5. Das behandelte Produkt wird an dem Fließbettreaktor 3 oben abgenommen und dem Gegenstromreaktor 6 (Fließbett 2) oben zugeführt. Im Gegenstrom wird Stickstoff geführt. Das behandelte Produkt wird an dem Gegenstrom-Reaktor 6 unten abgenommen und dem Silo 7 zugeführt.

## Patentansprüche

1. Verfahren zur Oberflächenbehandlung von hochdispersen Oxiden, Oxidgemischen oder Mischoxiden von Metallen und/oder Metalloiden, die durch thermische Zersetzung von flüchigen Verbindungen dieser Metalle bzw. Metalloide in dampfförmigem Zustand in Gegenwart hydrolysierend und/oder oxidierend wirkender Gase oder Dämpfe erhalten worden sind, durch Umsetzung ihrer an der Oberfläche befindlichen freien oder in Freiheit gesetzten OH-Gruppen mit Hydrophobierungsmitteln, die zur Umsetzung mit Hydroxylgruppen geeignet sind, in einer Wirbelschicht, bis sie ein Verhältnis von Dimethyl- zu Monomethylsilylgruppen von 100:0 bis 50:50 aufweisen, wobei man die noch sauren Oxide, Oxidgemische oder Mischoxide direkt im Anschluß an deren Herstellung mit einem zuvor verdampften Hydrophobierungsmittel möglichst homogen vermischt und unter Sauerstoffausschluß zusammen mit geringen Wasserdampfmengen und gegebenenfalls mit einem Intertgas in kontinuierlichem Betrieb bei Temperaturen von etwa 200 bis etwa 800 °C, vorzugsweise etwa 400 bis etwa 600 °C, in einem Wirbelbett behandelt und die festen Reaktionsprodukte gegebenenfalls nachentsäuert und trocknet, wobei man zweckmäßigerweise eine Berührung mit Sauerstoff vor dem Abkühlen auf unter etwa 200 °C vermeidet, **dadurch gekennzeichnet, daß** man als Hydrophobierungsmittel nicht halogenhaltige, kettenförmige Siloxane, monocyclische Methylcyclosiloxangemische D3 bis D9, vorzugsweise Octamethylcyclotetrasiloxan (D 4), verwendet.

2. Verfahren nach Anspruch 1, **dadurch gekennzeichnet, daß** man die mit dem Octamethylcyclotetrasiloxan (D4) vermischten Oxyde gemeinsam mit dem tragenden Medium dem Wirbelbett zuführt und aus dem oberen Teil, vorzugsweise nach Durchlaufen einer an sich bekannten Beruhigungszone, laufend abzieht.

3. Verfahren nach den Ansprüchen 1 oder 2, **dadurch gekennzeichnet, daß** man die Behandlung in einem an sich bekannten innenbeheizten Wirbelbett durchführt.

4. Verfahren nach den Ansprüchen 1 bis 3, **dadurch gekennzeichnet, daß** man die benötigte Wärme in an sich bekannter Weise teilweise in Form von Wasserdampf und/oder eines heißen Inertgases zuführt.

5. Verfahren nach den Ansprüchen 1 bis 4, **dadurch gekennzeichnet, daß** man den Wasserdampf und/oder das Inertgas in an sich bekannter Weise gleichzeitig zur pneumatischen Förderung der Reaktionspartner verwendet.

## Claims

1. Process for the surface treatment of highly dispersed oxides, oxide mixtures or mixed oxides of metals and/or metalloids that have been obtained by thermal decomposition of volatile compounds of these metals or metalloids in the vapour state in the presence of gases or vapours having a hydrolyzing and/or oxidizing action, by reacting their free OH groups or released OH groups located on the surface with hydrophobing agents that are capable of reacting with hydroxyl groups, in a fluidized bed, until they have a ratio of dimethylsilyl groups to monomethylsilyl groups of 100:0 to 50:50, in which connection the still acidic oxides, oxide mixtures or mixed oxides are mixed as homogeneously as possible directly following their preparation, with a previously evaporated hydrophobing agent and are treated, under the exclusion of oxygen, together with small amounts of steam and optionally with an inert gas in continuous operation at temperatures of about 200 to about 800°C, preferably about 400 to about 600°C, in a fluidized bed, and the solid reaction products are if necessary post-deacidified and dried, contact with oxygen before cooling to below about 200°C preferably being avoided, which process is **characterised in that** unhalogenated, chain-type siloxanes, monocyclic methylcyclosiloxane mixtures D3 to D9, preferably octamethylcyclotetrasiloxane (D4) are used as hydrophobing agent.

2. Process according to claim 1, **characterised in that** the oxides mixed with the octamethylcyclotetrasiloxane (D4) are added jointly together with the carrier medium to the fluidized bed and are withdrawn continuously from the upper part therefrom, preferably after passing through a settling zone known per se.

3. Process according to claim 1 or 2, **characterised in that** the treatment is carried out in an internally heated fluidized bed known per se.

4. Process according to claims 1 to 3, **characterised in that** the required heat is added in a manner known per se partially in the form of steam and/or a hot inert gas.

5. Process according to claims 1 to 4, **characterised in that** the steam and/or the inert gas are used in a manner known per se at the same time for the pneumatic conveyance of the reactants.

## Revendications

1. Procédé pour le traitement en surface des oxydes finement divisés, des mélanges d'oxydes ou d'oxydes mixtes de métaux et/ou de métalloïdes qui ont été obtenus par décomposition thermique de composés volatils de ces métaux ou métalloïdes, à l'état vaporisé en présence de gaz ou de vapeurs à action hydrolysante et/ou oxydante par mise en réaction de leurs groupes OH mis en liberté ou libres qui se trouvent à la surface, avec des agents hydrophobisants qui conviennent pour la réaction avec des groupes hydroxyles, en lit fluidifié jusqu'à ce qu'ils possèdent un rapport de groupes diméthylsilyle à monométhylsilyle de 100 : 0 à 50 : 50, dans lequel on mélange les oxydes, les mélanges d'oxydes ou les oxydes mixtes encore acides, directement en connexion avec leur production, de la manière la plus homogène possible avec un agent d'hydrophobisation préalablement vaporisé, et on traite en lit fluidifié à l'abri de l'oxygène conjointement avec de faibles quantités de vapeur d'eau et éventuellement avec un gaz inerte, en fonctionnement continu à des températures d'environ 200°C à environ 800°C, de préférence d'environ 400 à environ 600°C, et on désacidifie à nouveau éventuellement les produits de réaction solides et on les sèche, grâce à quoi on évite d'une manière appropriée une mise en contact avec l'oxygène avant le refroidissement à environ 200°C,
**caractérisé en ce qu'**
on utilise comme agent d'hydrophobisation des siloxanes en forme de chaîne, ne contenant pas d'halogène, des mélanges de méthylcyclosiloxanes monocycliques D3 à D9, de préférence de l'octaméthylcyclotétrasiloxane (D4).

2. Procédé selon la revendication 1,
**caractérisé en ce qu'**
on amène les oxydes mélangés à l'octaméthylcyclotétrasiloxane (D4) conjointement avec le milieu porteur, au lit fluidifié et on les retire d'une manière continue de la partie supérieure, de préférence après traversée d'une zone de stabilisation connue en soi.

3. Procédé selon les revendications 1 ou 2,
**caractérisé en ce qu'**
on effectue le traitement dans un lit fluidifié chauffé par l'intérieur, connu en soi.

4. Procédé selon l'une quelconque des revendications 1 à 3,
**caractérisé en ce qu'**
on amène la chaleur nécessaire d'une manière connue en soi, partiellement sous forme de vapeur d'eau et/ou d'un gaz inerte chaud.

5. Procédé selon l'une quelconque des revendications 1 à 4,
**caractérisé en ce qu'**
on utilise la vapeur d'eau et/ou le gaz inerte, d'une manière connue en soi, en même temps en vue du transport pneumatique des partenaires de réaction.
